# EUROPEAN PATENT APPLICATION

(11) **EP 4 468 532 A1**
(43) Date of publication of application: **27.11.2024**
(21) Application number: 24178079.0
(22) Date of filing: 24.05.2024
(51) Int. Cl.: H01R 13/629

(54) **CONNECTOR AND CONNECTOR SYSTEM**

(30) Priority: 26.05.2023 FR 2305294
(71) Applicant: Tyco Electronics France SAS, 95300 Pontoise (FR)
(72) Inventor: Delestre, Quentin, 95300 Pontoise (FR); Jodon de Villeroche, François, 95300 Pontoise (FR); Rouillard, Xavier, 95300 Pontoise (FR); Gallerand, Stéphane, 95300 Pontoise (FR)
(74) Representative: Grünecker Patent- und Rechtsanwälte PartG mbB

(57) **Abstract**

The invention relates to a connector comprising an inner shell (3), an outer shell (5), and a gear wheel (7), wherein the gear wheel (7) is arranged in a rack-and-pinion configuration with a first linear gear (29), the gear wheel (7) being hinged on the inner shell (3) rotatably with respect to a hinge axis (H) orthogonal to the mating direction (M). The gear wheel (7) comprises a first set (41) of external gear teeth (43) configured to engage with the first linear gear (29) in the rack-and-pinion configuration, and a second set (45) of external gear teeth (47) configured to engage with a second linear gear (105) of a mating connector (100), wherein the first set (41) and the second set (45) of external gear teeth (43, 47) are arranged in a same plane (L). The invention further relates to a connector system comprising the connector.

## Description

. The present invention relates to a connector configured to be coupled with a mating connector, comprising an inner shell, an outer shell, and gear wheel. The invention also relates to connector system comprising said connector.

. Connector systems are known in the art that comprise a connector, a mating connector, and a coupling system designed to facilitate the coupling of the connector and the mating connector. When the coupling is facilitated, the force, accuracy, and/or skill needed for the intended coupling of the connectors is reduced, improving user comfort and connector system reliability.

. Typical coupling systems implemented in high coupling force connector systems are lever systems. In a lever system, one connector is provided with an external lever hinged on the connector housing, and the mating connector is provided with a structure configured to hook into the load-side of the lever. An alternative solution is disclosed in patent document US 9,917, 402 B1, in which the coupling system includes a conventional round-gear and a cam-gear with variable pitch radii, the cam-gear and the round-gear being in communication with each other to form a stacked-gear.

. At the same time, many contemporary technical environments are further and further space-constrained, leaving less room for installation of the connectors, and less room for access to the connectors, such that the proposed enlarging coupling systems become unsuitable.

. It is therefore an object of the present invention to provide a more compact connector coupling solution, in particular for connector systems involving a high coupling force.

. This object is achieved with a connector according to the present disclosure. The connector is configured to be coupled in a mating direction with a mating connector, and comprises an inner shell, an outer shell, and a gear wheel. The outer shell envelops the inner shell at least partially and is configured to be moved in the mating direction relative to the inner shell. The outer shell comprises a first linear gear arranged along the mating direction on an inner surface of the outer shell. The gear wheel is arranged in a rack-and-pinion configuration with the first linear gear and is a hinged on the inner shell rotatably with respect to a hinge axis orthogonal to the mating direction.

. The connector is characterised in that the gear wheel comprises a first set of external gear teeth configured to engage with the first linear gear in the rack-and pinion configuration, and a second set of external gear teeth configured to engage with a second linear gear of the mating connector, wherein the first set and the second set of external gear teeth are arranged in a same plane.

. In this configuration, the gear wheel facilitates the coupling of the connector with the mating connector in a more compact arrangement. As the first and the second set of external gear teeth are arranged in one plane, the gear wheel itself is kept of a smaller size and mass than known in prior art. Further, as the first and the second set of external gear teeth are configured to engage respectively with a linear gear of the outer shell and a second linear gear of the mating connector, the linear gears can also be arranged in said plane, reducing the overall cross-sectional size of the connector.

. Additional optional features and the various aspects of the connector will be described in the following. The features and aspects can be freely combined amongst each other, yielding further possible embodiments or aspects of the inventive connector.

. In one aspect of the connector, a first pitch radius of the first set of external gear teeth can be different from a second pitch radius of the second set of the external gear teeth. A pitch radius of a gear wheel is understood as the distance between the gear wheel centre and a pitch point of the gear wheel, that is, the point of contact of meshed teeth of the gear wheel. With different pitch radii, advantageous leverage can be obtained, facilitating the coupling.

. In one aspect of the connector, the first pitch radius can be greater than the second pitch radius. In accordance with the law of the lever, the coupling force applied on the second linear gear by the second set of external gear teeth, that is, the gear wheel output force, is thus increased, with respect to the force applied on the outer shell, that is the gear wheel input force.

. In one aspect of the connector, the first pitch radius can be between 1.2 and five times, in particular 1.5 to three times, greater than the second pitch radius. Accordingly, the output force can be increased by said factor of 1.2 to five, in particular 1.5 to three. This factor provides an advantageous balance between force multiplication, gear wheel compactness and gear wheel structural stability.

. In one aspect of the connector, the teeth of the first set and the teeth of the second set can have the same pitch angle and/or circular thickness and/or face width. The pitch angle is the angle comprised between the pitch points of two successive gear teeth of the gear wheel. The circular thickness is the thickness of the gear teeth at the pitch point, in a plane orthogonal to the hinge axis. The face width is the width, that is, extension, of the gear teeth along a direction parallel to the hinge axis. This improves torque transmission between the first set of external gear teeth engaged with the linear gear of the outer shell and the second set of external gear teeth engaged with the second linear gear of the mating connector.

. In one aspect the connector, the teeth of the first set and the teeth of the second set can have the same dimensions. The manufacturing of the gear wheel and the linear gears of the connector and of the mating connector, for example the injection moulding, is thus simplified, and the cost-efficiency of the components increased.

. In one aspect of the connector, the inner shell can be configured to mate a housing element of the mating connector, and the inner shell comprises a recess extending along the mating direction, the recess being configured to receive the second linear gear of the mating connector when the inner shell is mated with the housing element, such that the second set of external gear teeth can engage with the second linear gear. Thus, the connector can receive the second linear gear of the mating connector in a configuration suitable for the engagement with the second set of external gear teeth, without increasing the cross-sectional size of the connector.

. In one aspect of the connector, the gear wheel can comprise at least one gear teeth flap. A gear teeth flap is a radial projection extending beyond the gear wheel circumference in conjunction with the gear teeth along the same angular region of the gear wheel circumference, but axially displaced with respect to the hinge axis, so as not to impede the gear teeth engagement. The gear teeth flap strengthens the structural integrity of gear teeth which can be at risk when high coupling forces are involved.

. In one aspect of the connector, the gear wheel can comprise a first gear teeth flap in the angular region of the gear wheel corresponding to the first set of external gear teeth, and a second gear teeth flap in the angular region of the gear wheel corresponding to the second set of external gear teeth. Thus, both the first set and the second set of external gear teeth are structurally strengthened with respect to the gear wheel.

. In one aspect of the connector, the second flap is arranged on an opposing side with respect to the first flap. That is, the first flap and the second flap are arranged on mutually opposing sides of the gear wheel along the hinge axis. This improves the balance of the gear wheel axially.

. In one aspect of the connector, the first flap can be arranged on the side of the first set of external gear teeth opposed to an inner surface of the outer shell, and the second flap can be arranged on the side of the second set of external gear teeth opposed to an outer surface of the inner shell. In this configuration, the guiding of the engagement of the first set of external gear teeth with the linear gear of the outer shell is improved and protected from interference by the first flap. In a corresponding fashion, the guiding of the engagement of the second set of external gear teeth with the second linear gear can be improved and protected from outside interference by the second flap.

. In one aspect of the connector, the outer shell can be configured to be moved relative to the inner shell from a first uncoupled position to a second position in which the connector is coupled to the mating connector, and the inner shell comprises a protrusion formed on an outer surface of the inner shell on which the gear wheel is hinged, and the gear wheel comprises a depression matching the protrusion and configured to receive the protrusion in the first position. According to this aspect, the outer shell can be stabilised with respect to the inner shell in the first position by action of the frictional engagement of the protrusion of the inner shell in the gear wheel depression. This improves handling of the connector, as a frictional resistance must be overcome to move the outer shell with respect to the inner shell and initiate the coupling with the mating connector.

. In one aspect of the connector, the gear wheel can comprise at least one cut-out region. This allows for the mass and material cost of the gear wheel to be reduced, in particular in angular zones around the gear wheel centre, in other words "pie slices", which are not structurally needed.

. In one aspect of the connector, the at least one cut-out region is comprised in an angular region of the gear wheel between the first and the second set of teeth. This can free up an angular movement path for the protrusion (formed on an outer surface of the inner shell) in the gear wheel, once the protrusion is moved out of the depression and the coupling is initiated. In other words, friction between the gear wheel and the protrusion is reduced and the rotation of the gear wheel is facilitated.

. In one aspect of the connector, the cut-out region can be an entirely hollowed out region. The mass and material cost of the gear wheel thus be even further reduced.

. In one aspect of the connector, the gear wheel can be interposed between the inner shell and the outer shell. The gear wheel that is thus interposed is enveloped by the outer shell and not external accessible, reducing the risk of wrongful manipulation or damage to the gear wheel. This can enhance the reliability of the coupling system.

. In one aspect of the connector, the gear wheel can be interposed between the inner shell and the outer shell in a plane parallel to the mating direction. This can reduce the minimal distance between the outer surface of the inner shell and the surface of the outer shell, further increasing compactness.

. In one aspect of the connector, the connector can comprise a connector position assurance device (CPA) configured to lock the relative position of the outer shell along the mating direction with respect to the inner shell in the second position. The CPA is moveably arranged with respect to the outer shell from an unlocked position to a locked position. The CPA is arranged in the outer shell such that a one distal extremity of the CPA is located in a receiving pocket formed in the outer shell of the connector, and the another distal extremity opposed to the one distal extremity is located outside of the receiving pocket. The CPA comprises a locking nose. A corresponding locking notch is formed on an outer surface of the inner shell, and is configured to receive the locking nose, when the outer shell is in the second, coupling, position with respect to the inner shell, and the CPA is moved with respect to the outer shell into the locked position. A thus configured CPA provides a locking function for the connector when it is coupled with a mating connector, while preserving the compactness of the assembly.

. In one aspect of the connector, the ratio of the first pitch radius over the second pitch radius corresponds to the ratio of the number of external gear teeth in the first set over the number of external gear teeth in the second set. This allows for improved distribution of the action of the coupling forces over respective gear teeth engagements, thus smoothing force transmission by avoiding unsuitably high load on individual teeth.

. In one aspect of the connector, the inner shell or the outer shell can comprise a linear cam extending along the mating direction, and the respectively other one of the inner shell and the outer shell further comprises a projection configured as a corresponding cam follower for the linear cam, and the moving of the outer shell relative to the inner shell comprises a sliding of the projection along the linear cam. The linear cam and the corresponding projection can provide a sliding that advantageously guides and stabilises the moving of the outer shell with respect to the inner shell.

. In one aspect of the connector, the connector can be an electrical connector. Further, the inner shell of the electrical connector can house at least one electrical terminal, in particular an electrical terminal configured for electrical voltages of 400V or more. The electrical connector can benefit from above-described compactness and thus be suited for electrical applications in tight spaces, in particular in the context of electrical vehicle charging inlet connections or battery connections.

. The present invention also relates to connector system comprising the connector according to any one of the above-described aspects, and a mating connector. The mating connector comprises a housing element configured to mate the inner shell, the housing element comprising a second linear gear formed on an outer surface of the housing element, the second linear gear being configured to engage with the second set when the connector and the mating connector are coupled. This inventive connector system benefits from the compactness and structural simplicity of the above-described connector having a gear-wheel-based coupling system in which two sets of teeth are arranged in a same plane. As the sets of teeth are arranged in a same plane, the mating connector does not require any further component. The risk of increasing the cross-sectional size of the connector defined by the outer shell is thus reduced, and the connector system is more compact, in particularly more suited for tight spaces, than prior art connectors having cumbersome coupling solutions such as levers.

. The above-described aspects, objects, features and advantages of the present invention will be more completely understood and appreciated by careful study of the following more detailed description of a presently preferred exemplary embodiment of the invention, taken in conjunction with accompanying drawings, in which:
Figure 1 illustrates a connector according to an embodiment of the invention prior to coupling with a mating connector.
Figure 2A illustrates the gear wheel of the connector of Figure 1.
Figure 2B illustrates an alternative gear wheel for a connector according another embodiment of the invention.
Figure 3A illustrates the connector of Figure 1 during the coupling with the mating connector.
Figure 3B illustrates the connector of Figure 1 in a coupled but unlocked state.
Figure 3C illustrates the connector of Figure 1 in a coupled and locked state.

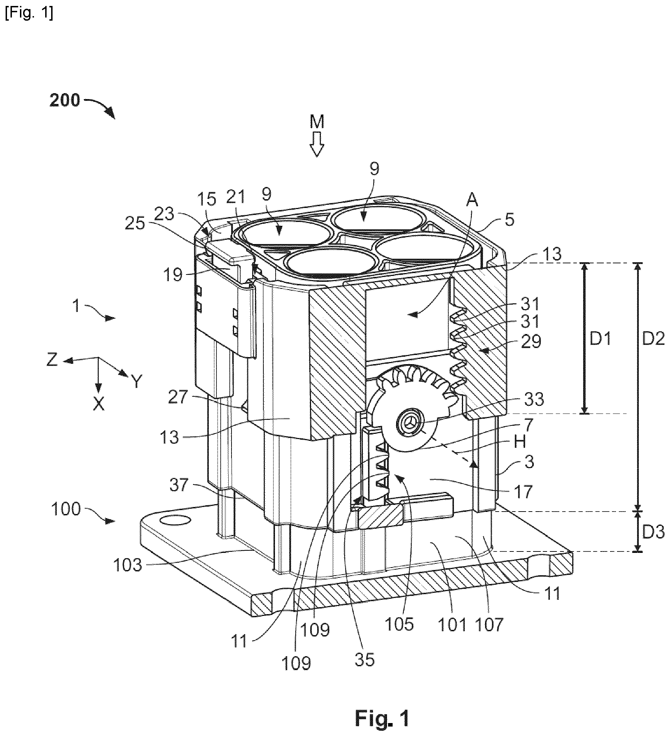

. Unless explicitly described otherwise, the structural features of the objects illustrated in Figures 1 to 3C are not drawn to scale, neither individually with respect to their Cartesian dimensions, nor with respect to each other along one Cartesian direction. Further, identical reference signs used in different figures relate to identical elements.

. In the following detailed description of Figures 1 to 3C, the connector 1 according to an embodiment of the invention and the connector system 200 according to another embodiment of the invention shall be described together.

. Figure 1 shows the connector system 200, comprising the connector 1 and a mating connector 100. In the view of Figure 1, the connector 1 and the mating connector 100 are illustrated in a preliminary state, prior to a coupling and locking of the connectors.

. The connector 1 comprises an inner shell 3, an outer shell 5, and a gear wheel 7. For illustration purposes, in Figure 1, a cross-sectional portion of the outer shell 5 is removed (or rendered transparent) to allow visual access to the area A comprising the gear wheel 7 and further elements that will be described in the following.

. In the present embodiment, the connector 1 is an electrical connector, and the mating connector 100 is an electrical header counter connector. The connector 1 comprises four electrical terminals (not represented) housed in four respective terminal cavities 9. The connector 1 and the mating connector 100 are power connectors for electrical vehicles and are configured for high-voltage electrical connections, for example with electrical voltages of 400V or more.

. The connector 1 is configured to be coupled with the mating connector 100 in the mating direction M parallel to a first Cartesian direction X. In the present embodiment, the connector 1 including the inner shell 3 and the outer shell 5, as well as the mating connector 100, have a quadratic cross-section in the plane Y-Z perpendicular to the mating direction M. The edges 11 parallel to the mating direction M of the inner shell 3 are rounded, while the edges 13 parallel to the mating direction M of the outer shell 5 are chamfered.

. The outer shell 5 envelops partially the inner shell 3. In particular the outer shell 5 surrounds the entire circumference of the inner shell 3 in the plane Y-Z perpendicular to the mating direction M, along an extension D1 along the mating direction M smaller than the extension D2 of the inner shell 3. Thus, the outer shell 5 comprises an inner surface 15 at least partially face-to-face with the outer surface 17 of the inner shell 3.

. The connector 1 further comprises a connector position assurance device (CPA) 19 for the locking in position of the connector 1 when it is fully and correctly coupled with the mating connector 100. The CPA 19 is arranged in a pocket 21 formed in the outer shell 5 and extending along the mating direction M, so as to be movable with respect to the outer shell 5 in the pocket 21 between an unlocked position and a locked position. In the view of Figure 1, as the connector 1 is yet uncoupled with the mating connector 100, the CPA 19 is also in an unlocked position.

. The CPA 19 comprises, in the mating direction M, a first distal extremity 23 and a second distal extremity (not visible) opposed to the first distal extremity 23. The CPA 19 is arranged in the pocket 21 such that in both the unlocked position and the locked position, the first distal extremity 23 remains outside the pocket 21 and the second distal extremity remains inside the pocket 21.

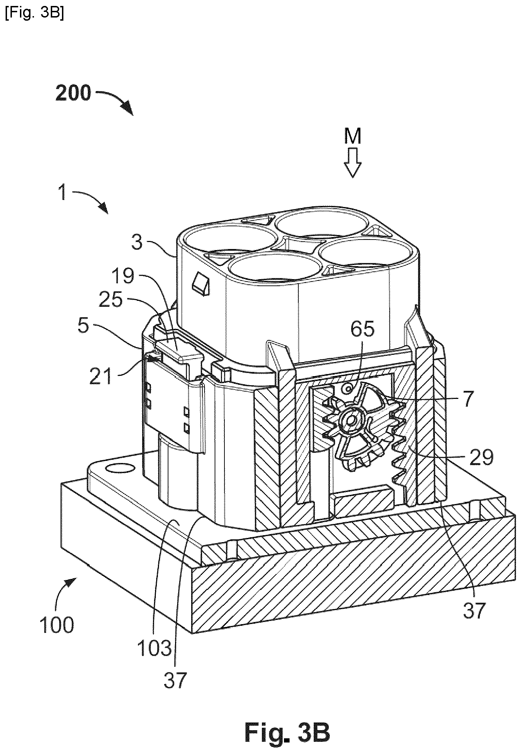

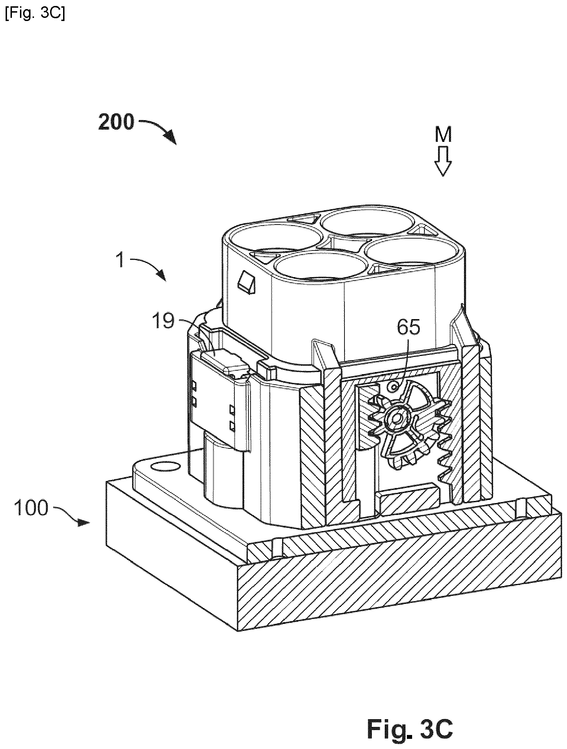

. The first distal extremity 23 of the CPA 19 comprises an actuation grip 25. The actuation grip 25 is configured to facilitate manual movement of the CPA 19 in the pocket 21 and is formed to protrude outwardly, with respect to the inner shell 3. A locking nose (not visible) is formed at the second distal extremity of the CPA 19 so as to protrude inwardly, facing the outer surface 17 of the inner shell 3.A corresponding locking notch 27 is formed on the outer surface 17 and is configured to receive the locking nose, when the coupled connectors 1, 100 are a locked (see Figures 3B, 3C).

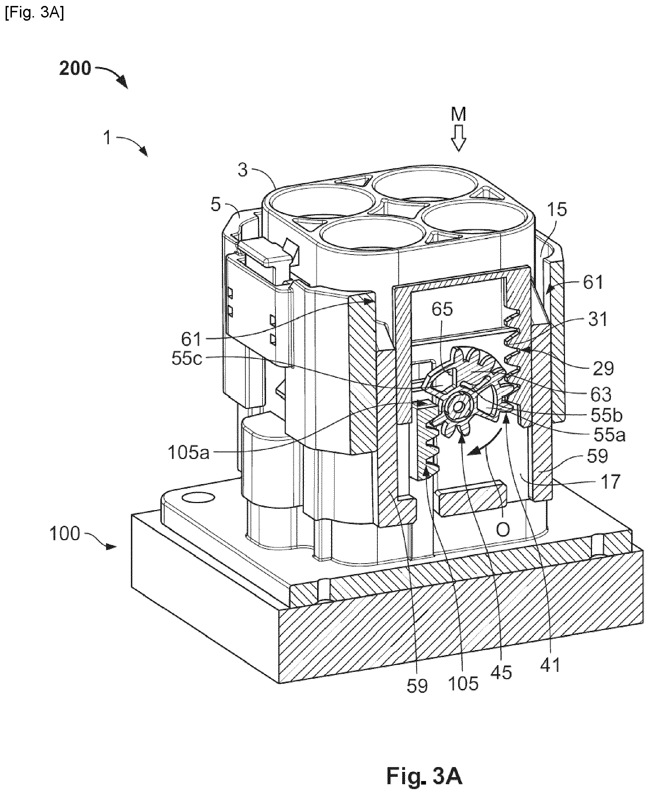

. The area A revealed in Figure 1 shows that the outer shell 5 comprises a first linear gear 29. The first linear gear 29 is formed on the inner surface 15 of the outer shell 5, extending along the mating direction M. Specifically, the first linear gear 29 is formed such that the teeth 31 of the first linear gear 31 are oriented in parallel to the inner surface 15 of the outer shell 5 and the outer surface 17 of the inner shell 3, such that the first linear gear 29 is interposed, or sandwiched, parallelly between inner and outer shell 3, 5. This will be further described with respect to Figures 3A to 3B.

. The housing element 101 of the mating connector 100 comprises a similarly arranged second linear gear 105 extending along the mating direction M. The second linear gear 105 is formed on the outer surface 107 of the housing element 101 such that the teeth 109 of the second linear gear 105 are oriented in parallel to the outer surface 107 of the housing element 101.

. The area A also shows that the gear wheel 7 is hinged on a hinge shaft 33 formed on the outer surface 17 of the inner shell 3 and extending along a hinge axis H orthogonal to the mating direction M. The gear wheel 7 is hinged on the hinge shaft 33 so as to be rotatable with respect to the hinge shaft 33 and the hinge axis H, and, as will be further described in the following, such that the gear wheel's 7 teeth can engage with the first linear gear 29 and the second linear gear 105.

. As will be further explained and illustrated in the following, the outer shell 5 is movable with respect to the inner shell 3 along the mating direction M between an uncoupled position and a coupled position. In the presently described Figure 1, the connector 1 has been moved in the vicinity of the mating connector 100 and the inner shell 3 has been mated with a matching housing element 101 of the mating connector 100. Specifically, the inner shell 3 has been plugged over the housing element 101 such that the second linear gear 105 is received in a recess 35 formed in the inner shell 3 extending along the mating direction M.

. However, the distal edge 37 in the mating direction M of the inner shell 3 housing the terminals is still spaced apart by a distance D3 from the corresponding abutment 103 of the mating connector 100. The respective terminals of the connector 1 and the mating connector 100 are thus not in the intended contact position, and the connector system 200 is uncoupled, until the distance D3 is overcome.

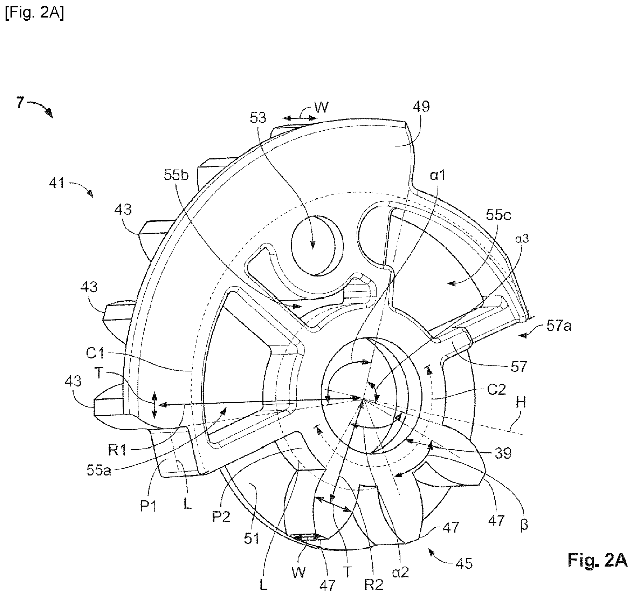

. The gear wheel 7 of the above-described connector system 200 will now be described with reference to Figure 2A. Figure 2A illustrates the gear wheel 7 alone, in a perspective view. In the present embodiment, the gear wheel 7 is a monolithic injection moulded piece having a central through hole 39. The central through hole 39 is configured to receive the hinge shaft 33 and extends along a central axis corresponding to the hinge axis H when assembled in the connector 1. The gear wheel 7 comprises a first set 41 of external gear teeth 43, and a second set 45 of external gear teeth 47. The teeth 43 of first set 41 are configured to engage with the first linear gear 29, and the teeth 47 of the second set 45 are configured to engage with the second linear gear 105.

. The first set 41 of external gear teeth 43 is arranged at a first pitch radius R1 and along a first peripheral surface P1, the peripheral surface P1 defining a first hemi-circle C1 around the hinge axis H. Similarly, the second set 45 of external gear teeth 47 is arranged at a second pitch radius R2 and along a second peripheral surface P2, said peripheral surface P2 defining a second hemi-circle C2 around the hinge axis H. The first hemi-circle C1 in the second hemi-circle C2 correspond to two opposing halves of the gear wheel 7.

. In accordance with the distinguishing characteristics of the present invention, the first set 41 of external gear teeth 43 and the second set 45 external gear teeth 47 are arranged in a same plane, for example the plane defined by the median line L. Here, the median line L is the line separating the gear wheel 7 in two halves of equal thickness along the hinge axis H.

. In other words, the planes in which the first set 41 of teeth 43 is arranged match the planes in which the second set 45 of teeth 47 is arranged. That is, all gear teeth 43, 47 of the gear wheel 7 extend along the same range along the hinge axis H. The first set 41 of teeth 43 and the second set 45 teeth 47 are arranged in the same axial region of the gear wheel 7.

. The distinguishing gear wheel 7 allows for a single device to assure advantageous torque transmission for coupling facilitation, wherein the device is structured to be particularly compact and light in comparison to prior art coupling solutions.

. In the present embodiment, the value of the first pitch radius R1 is double the value of the second pitch radius R2. Further, the first set 41 comprises six external gear teeth 43, arranged along the first peripheral surface P1 in a first angular region α1 around the hinge axis H. The second set 45 comprises three external gear teeth 47, arranged along the second peripheral surface P2 in a second angular region α2 around the hinge axis H. In addition, the teeth 43, 47 of the first set 41 and the second set 45 have the same dimensions, in particular the same pitch angle β, the same circular thickness T, and the same face width W.

. In variants, the first pitch radius R1 can be 1.2 times greater, or five times greater, or any value therebetween, than the second pitch radius R2. Preferably, the first pitch radius R1 is 1.5 to three times greater than the second pitch radius R2. However, for improved torque transmission and compactness, it is advantageous that the ratio of the first pitch radius over the second pitch radius corresponds to the ratio of the number of external gear teeth in the first set over the number of external gear teeth in the second set.

. The gear wheel 7 comprises a first gear teeth flap 49 and a second gear teeth flap 51. The first flap 49 protrudes outwardly from the first peripheral surface P1 along the first angular region α1, adjacently to the teeth 43 of the first set 41. Correspondingly, the second flap 51 protrudes outwardly from the second peripheral surface P2 along the second angular region α2, adjacently to the teeth 47 of the second set 45.

. The first flap 49 is arranged adjacently to the teeth 43 on the side opposed to the inner surface 15 of the outer shell 5. The second flap 51 is arranged adjacently to the teeth 43 on the side opposed to the outer surface 17 of the inner shell 3.The flaps 49, 51 cover at least one side of their respective gear teeth sets 41, 45, improving structural stability and guidance of the respective engagement with the linear gears 29, 105.

. A depression 53 is formed in the gear wheel 7 in the first angular region α1 and is configured to receive a corresponding protrusion 65 formed on the outer surface 17 of the inner shell 3. The protrusion 65 is not visible on Figures 1 and 2A, but visible on Figures 3A and 3B. The functionality of the depression 53 and the corresponding protrusion 65 will become clearer in view of Figures 3A to 3C and the description thereof.

. To reduce the gear wheel 7 mass and material cost, some radial regions between the central through hole 39 and the first peripheral surface P1 are cut-out, that is, hollowed out. In the present embodiment, the gear wheel 7 comprises three cut-out radial regions 55a, 55b, 55c in the first hemi-circle C1. In this embodiment, the cut-out regions 55a, 55b, 55c are entirely hollowed out, that is, traverse, the body of the gear wheel 7. In variants, some or all of the cut-out regions 55a, 55b, 55c can only partially hollowed.

. The radial regions 55a and 55b are comprised in the first angular region α1. The radial region 55c is substantially comprised in an angular region α3 of the gear wheel 7 between the first angular region α1 and the second angular region α2. The region 55c is configured to receive the protrusion 65 when it is dislodged out of the depression 53 and facilitates the rotation of the gear wheel 7 with respect to the inner shell 3, by avoiding excessive friction with the protrusion 65.

. As an optional feature, the gear wheel 7 can comprise a wheel spoke element 57 having in a radial direction of the wheel 7 a predetermined shape, for example a step shape 57a. The step shape 57a is arranged in an area of initial engagement with the second linear gear 105. When the predetermined shape is adapted to the shape of the tip 105a (see Fig. 3A) of the second linear gear 105 to be received in the recess 35 and the inner shell 3, an additional foolproofing of the initiation of the coupling by rotation of the gear wheel can be obtained.

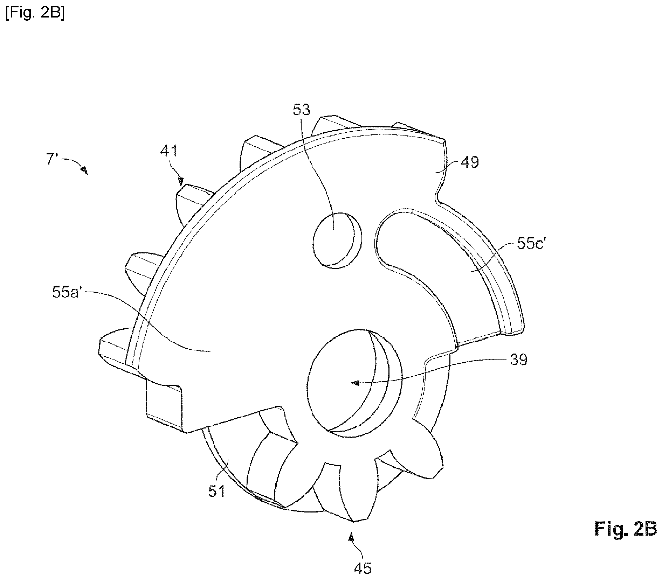

. An alternative gear wheel 7' is illustrated in Figure 2B. The gear wheel 7' is a gear wheel suitable for a connector according to another embodiment of the invention, and/or for a connector system according to another further embodiment of the invention. For example, the gear wheel 7' can be a gear wheel for a connector that differs from connector 1 only with respect to the configuration of the gear wheel. The gear wheel 7' can also be a gear wheel for a connector system that differs from connector system 200 only with respect to the configuration of the gear wheel. In comparison to the gear wheel 7, the gear wheel 7' requires more material, but is also more dense and the more mechanically robust. It therefore has a greater reliability and durability.

. The gear wheel 7' differs from the gear wheel 7 only with respect to the cut-out radial regions. Thus, the gear wheel 7' also comprises the central through hole 39, the depression 53, the flaps 49, 51, and the sets of teeth 41, 45. However, the gear wheel does not comprise the same cut-out radial regions 55a, 55b, 55c as the gear wheel 7. Specifically, instead of the cut-out radial regions 55a and 55b, the gear wheel 7' comprises a solid region 55a' that is monolithic with the rest of the gear wheel 7'. Instead of the cut-out radial region 55c, the gear wheel 7' comprises the cut-out region 55c'.

. The cut-out region 55c' is reduced, in particular substantially reduced, in area in the plane orthogonal to the hinge axis H, in comparison to the cut-out radial region 55c. Specifically, the cut-out region 55c' has an area in the plane orthogonal to the hinge axis H that corresponds to the minimal area necessary to receive a protrusion, such as protrusion 65, when it is dislodged out of the depression 53, and to facilitate the rotation of the gear wheel 7' with respect to the inner shell of the connector. In the following, the coupling and locking of the connector system 200 will be described with reference to Figures 3A, 3B and 3C. The view of Figures 3A to 3C is the perspective view of Figure 1, with the distinction that the outer shell 5 is partially sectioned along the median line L of the gear wheel 7 indicated on Figure 2A.

. Figure 3A shows the connector system 200 during an intermediary stage of the coupling sequence between the connector 1 and the mating connector 100. After the inner shell 3 has been mated with the housing element 101 of the mating connector 100, and brought into the position illustrated on Figure 1, the outer shell 5 is moved, preferably pushed manually, in the mating direction M.

. To facilitate the moving of the outer shell 5 with respect to the inner shell 3, the outer surface 17 of the inner shell 3 is provided with linear projections 59 extending along the mating direction M, over at least half of the extension D2 along the mating direction M of the inner shell 3. The linear projections 59 are arranged in corresponding linear cams 61 formed in the inner surface 15 of the outer shell 5. Thus, when the outer shell 5 is moved with respect to the inner shell 3, the outer shell 5 can slide in a smooth and guided manner along the outer surface 17 of the inner shell 3.

. When the outer shell 5 is slid along the cams 61 in the mating direction M relative to the inner shell 3, the first linear gear 29 also moves in the mating direction M and engages with the first set 41 of external gear teeth. As the outer shell 5 moves in the mating direction M, the gear wheel 7 is rotated around its hinge shaft 33 in a clockwise rotation direction O, in a rack-and-pinion configuration in which the first linear gear 29 is configured as rack, and the gear wheel 7 is configured as pinion follower. With the clockwise rotation direction O of the gear wheel 7, the second set 45 of external gear teeth engages with the second linear gear 105 on the other side of the gear wheel 7. Thus as the gear wheel 7 rotates in clockwise rotation direction O, the second set 45 of teeth applies the coupling force in a direction opposed to the mating direction M on the second linear gear 105, pulling the mating connector 100 towards the connector 1. The increased first pitch radius R1 with respect to the second pitch radius R2 (see Figure 2A) provides advantageous force transmission for the coupling force applied on the outer shell 5 on the mating connector 100.

. The advantageous force transmission is particularly important in electrical connector applications involving a plurality of electrical terminals, in which the required coupling force is cumulative with respect to the number of electrical terminals. However, the advantageous force transmission can also be important in alternative embodiments in which the connector is not an electrical connector, for example instead a hydraulic connector. In the case of a hydraulic connector system the coupling system needs to overcome the sealing force of sealing structures configured to render the connector system watertight.

. Figures 3A (as well as 3B and 3C) shows both the first set 41 and the second set 45 gear teeth of the gear wheel 7, their respective engagements with the first linear gear 29 the second linear gear 105, and the cut-out regions 55a, 55b, 55c of the gear wheel 7. In addition, Figure 3A shows the backside 63 of the depression 53 formed in the gear wheel 7, and shows partially the protrusion 65 formed on the outer surface 17 of the inner shell 3 that is configured to be received in the depression 53 in a default, uncoupled, delivery state. The protrusion 65 is more clearly visible on Figures 3B and 3C.

. In Figure 3A, the initial frictional resistance due to the friction fit of the protrusion 65 lodged in the depression 53 has been overcome by the pushing of the outer shell 5. The gear wheel 7 is already dislodged out of the stable delivery state, and rotated clockwise rotation direction O.

. In Figure 3B, the distal edge 37 of the connector 1 has abutted on the abutment 103 of the mating connector 100. Thus, the movement of the outer shell 5 with respect to the inner shell 3, and the movement of the gear wheel 7 acting as pinion with respect to the first linear gear 29 acting as rack, have reached the end of their ranges. The outer shell 5 is in the coupled position, and the connector system 200 is in a fully coupled the state, as all electrical terminals are contacting as intended.

. However, the connector 1 can be uncoupled from the mating connector 100 by mere pulling of the outer shell 5 in a direction opposed to the mating direction M, or even by excessive vibration. The connector system is, in Figure 3B, thus not locked. The CPA 19 is in an unlocked position with respect to the outer shell 5. In order to lock the connector system 200, the CPA 19 is moved, for example by manual push on the actuation grip 25, from the unlocked position along the mating direction M further into the pocket 21 until the locking nose (not visible) can lock with or behind the locking notch 27, establishing a form fit. When the form fit is established, the CPA 19 is in the locked position. Figure 3C illustrates the connector of Figure 1 in a coupled and locked state, in which the CPA 19 is in the locked position.

. The herein described connector 1, and the connector system 200, realise the invention by providing an improved connector coupling solution with reduced size. The greater compactness of the presently disclosed inventive coupling solution is particularly suitable for space-constrained or tight environments.

### . Reference numerals

1 connector
3 inner shell
5 outer shell
7 gear wheel
9 terminal cavity
11 edges of the inner shell
13 edges of the outer shell
15 inner surface of the outer shell
17 outer surface of the inner shell
19 CPA
21 pocket in the outer shell
23 first distal extremity of the CPA
25 actuation grip of the CPA
27 locking notch formed on the inner shell
29 first linear gear
31 teeth of the first linear gear
33 hinge shaft
35 recess in the inner shell
37 distal edge of the connector
39 centre through hole
41 first set of external gear teeth
43 external gear teeth of the first set
45 second set of external gear teeth
47 external gear teeth of the second set
49 first gear teeth flap
51 second gear teeth flap
53 depression
55a, 55b, 55c cut-out radial regions
57 wheel spoke element
57a step shape in radial direction
59 linear projections
61 linear cams
63 backside of the depression
65 protrusion on the inner shell
100 mating connector
101 housing element of the mating connector
103 abutment of the mating connector
105 second linear gear
105a tip of the second linear gear
107 outer surface of the housing element
109 teeth of the second linear gear
200 connector system
A area visible in Figure 1
C1 first hemi-circle
C2 second hemi-circle
D1 extension along the mating direction of the outer shell
D2 extension along the mating direction of the inner shell
D3 distance to coupled state
H hinge axis
L median line of the cross-sectional view
M mating direction
O clockwise rotation direction
P1 first peripheral surface of the gear wheel
P2 second peripheral surface of the gear wheel
R1 first pitch radius
R2 second pitch radius
T circular thickness of the teeth
W face width of the teeth
X,Y,Z Cartesian directions
α1 first angular region
α2 second angular region
α3 angular region between the first angular region and the second angular region
β pitch angle of the teeth

## Claims

1. Connector configured to be coupled in a mating direction (M) with a mating connector (100), the connector (1) comprising an inner shell (3), an outer shell (5), and a gearwheel (7), wherein
the outer shell (5) envelops the inner shell (3) at least partially and is configured to be moved in the mating direction (M) relative to the inner shell (3), the outer shell (5) comprising a first linear gear (29) arranged along the mating direction (M) on an inner surface (15) of the outer shell (5), and
the gear wheel (7) is arranged in a rack-and-pinion configuration with the first linear gear (29), the gear wheel (7) being hinged on the inner shell (3) rotatably with respect to a hinge axis (H) orthogonal to the mating direction (M),
**characterized in that** the gear wheel (7) comprises a first set (41) of external gear teeth (43) configured to engage with the first linear gear (29) in the rack-and-pinion configuration, and a second set (45) of external gear teeth (47) configured to engage with a second linear gear (105) of the mating connector (100), wherein the first set (41) and the second set (45) of external gear teeth (43, 47) are arranged in a same plane (L).

2. Connector according to claim 1, wherein a first pitch radius (R1) of the first set (41) of external gear teeth (43) is different from a second pitch radius (R2) of the second set (45) of external gear teeth (47), in particular wherein the first pitch radius (R1) is greater, preferably between 1.2 and five times greater, than the second pitch radius (R2).

3. Connector according to any one of claims 1 to 2, wherein the teeth (43) of the first set (41) and the teeth (47) of the second set (45) have the same pitch angle (β) and/or circular thickness (T) and/or face width (W), in particular wherein the teeth (43) of the first set (41) and the teeth (47) of the second set (45) have the same dimensions.

4. Connector according to any one of claims 1 to 3, wherein the gear wheel (7) comprises at least one cut-out region (55c), in particular an entirely hollowed out region, wherein the cut-out region (55c) is comprised in an angular region (α3) of the gear wheel (7) between the first set (41) and the second set (45) of teeth (43, 47).

5. Connector according to any one of claims 1 to 4, wherein the inner shell (3) is configured to mate a housing element (101) of the mating connector (100), and the inner shell (3) comprises a recess (35) extending along the mating direction (M), the recess (35) being configured to receive the second linear gear (105) of the mating connector (100) when the inner shell (3) is mated with the housing element (101), such that the second set (45) of external gear teeth (47) can engage with the second linear gear (105).

6. Connector according to any one of claims 1 to 5, wherein the gear wheel (7) comprises at least one gear teeth flap, in particular comprises a first flap (49) in the angular region (α1) of the gear wheel (7) corresponding to the first set (41) and a second flap (51) in the angular region (α2) of the gear wheel (7) corresponding to the second set (41) on an opposing side with respect to the first flap (49).

7. Connector according to any one of claims 1 to 6, wherein the outer shell (5) is configured to be moved relative to the inner shell (3) from a first, uncoupled position to a second position, in which the connector (1) is coupled to the mating connector (100), and
the inner shell (3) comprises a protrusion (65) formed on an outer surface (17) of the inner shell (3) on which the gear wheel (7) is hinged, and
the gear wheel (7) comprises a depression (53) matching the protrusion (65) and configured to receive the protrusion (65) in the first position.

8. Connector according to any of claims 1 to 7 in combination with claim 2, wherein the ratio of the first pitch radius (R1) over the second pitch radius (R2) corresponds to the ratio of the number of external gear teeth (43) in the first set (41) over the number of external gear teeth (47) in the second set (45).

9. Connector according to any one of claims 1 to 8, wherein the inner shell (3) or the outer shell (5) comprises a linear cam (61) extending along the mating direction (M), and wherein the respectively other one of the inner shell (3) and the outer shell (5) further comprises a projection (59) configured as a corresponding cam follower for the linear cam (61), and wherein the moving of the outer shell (5) relative to inner shell (3) comprises a sliding of the projection (59) along the linear cam (61).

10. Connector system comprising the connector (1) according to any one of claims 1 to 9, and a mating connector (100),
the mating connector (1) comprising a housing element (101) configured to mate the inner shell (3),
the housing element (101) comprising a second linear gear (105) formed on an outer surface (107) of the housing element (101), the second linear gear (5) being configured to engage with the second set (45) when the connector (1) and the mating connector (100) are coupled.
